# EUROPEAN PATENT APPLICATION

(11) **EP 3 546 323 A1**
(43) Date of publication of application: **02.10.2019**
(21) Application number: 19165635.4
(22) Date of filing: 27.03.2019
(51) Int. Cl.: B62D 25/10, B62D 33/06, B62D 49/00

(54) **AN AGRICULTURAL TRACTOR**

(30) Priority: 27.03.2018 GB 201804856
(71) Applicant: AGCO International GmbH, 8212 Neuhausen am Rheinfall (CH)
(72) Inventor: SAP, Bruno, 60026 Beauvais (FR)
(74) Representative: AGCO Intellectual Property Department

(57) **Abstract**

An agricultural tractor comprising: a chassis (16) having a front end (60) and a rear end (62), the chassis (16) defining a longitudinal axis (A); a first axle (18); a second axle (20); a hood (14) which substantially encloses an engine compartment (56); and a cab (12). The first axle (18) and the hood (14) are proximate the front end (60) of the chassis (16) and the second axle (20) and the cab (12) are proximate the rear end (62) of the chassis (16). The hood (14) and cab (12) are positioned above the chassis (16), and the cab (12) and chassis (16) are fixed relative to each other and longitudinally spaced apart on the chassis (16).

## Description

### FIELD OF THE INVENTION

The invention relates to an agricultural tractor. In particular the invention relates to the arrangement of the hood and cab of the agricultural tractor on the tractor's chassis.

### TECHNICAL BACKGROUND

Agricultural tractors, or simply tractors, are typically used continuously for prolonged periods. Indeed the operator of a tractor may occupy the cab of the tractor's cab for many hours at a time. Consequently, the operator's wellbeing and comfort is of concern in the design of cabs for tractors. Many factors affect the comfort levels experienced by an operator, for example: mechanical noise, vibration and heat transfer from the engine compartment are part of particular concern. To address these unwanted factors, it is common place to provide suspension on the operator's seat. It is also known to provide damper bushings on the cab mounts between the cab and chassis. It is also known to provide heat shielding between the engine compartment and the cab to reduce the transfer of heat into the cab. This heat shielding often inhibits the operator's field of vision from the cab. Because of this the operator may have to hold themselves in awkward positions whilst trying to control the vehicle which may increase the likelihood of operator fatigue during extended working sessions. Dust and debris may also build up on the windscreen of tractors further inhibiting an operator's field of vision.

### SUMMARY OF THE INVENTION

It is an object of the invention to provide an improved tractor design which improves the operator's wellbeing when using the tractor by reducing unwanted noise, vibration and heat ingress into the tractor cab and improving the operator's field of vision from inside the cab.

According to the invention, there is provided:
An agricultural tractor comprising: a chassis having a front end and a rear end, the chassis defining a longitudinal axis; a first axle; a second axle; a hood which substantially encloses an engine compartment; and a cab. The first axle and the hood are proximate the front end of the chassis and the second axle and the cab are proximate the rear end of the chassis. The hood and cab are positioned above the chassis. The cab and chassis are fixed relative to each other and longitudinally spaced apart on the chassis. Advantageously, isolating the cab from the hood improves noise vibration and harshness that may otherwise be transmitted from the hood to the cab.

The first axle may be a steered axle and or the second axle may be a steered axle.

The hood may comprise a rear face, the rear face may face toward the cab and may be spaced apart from the cab.

An air intake aperture may be positioned between the hood and may face the cab.

The rear face may include an aperture for the passage of air.

The aperture may be an air exhaust aperture, and or the aperture may be an air intake aperture.

Advantageously, positioning an air intake in a gap between the cab and the hood reduces the likelihood of debris being drawn into the air intake. Also, air drawn through such a gap has a cooling effect on the surface of the cab over which the air is passes.

The cab may be positioned above the second axle. The hood may be positioned above the first axle.

The cab may comprise an A-pillar, the A-pillar may have an upper portion and a lower portion, and the upper portion may be situated further along the longitudinal axis toward the first axle than the lower portion. The upper portion may extend above and over the hood. The lower portion may be positioned further toward the rear end of the chassis than any part of the hood.

A windscreen wiper may be positioned between the cab and hood.

The portion of the cab that faces the hood may be transparent. Advantageously, spacing the cab from the hood allows the entire forward face of the cab to be transparent. This allows an operator increased visibility of the portion of the tractor forward of the cab and improves for instance visibility of front wheels.

### INTRODUCTION TO THE DRAWINGS

Embodiments of the invention will now be described, by way of example only, with reference to the accompanying drawings, in which:
Fig. 1 is a schematic side elevation of a tractor according to the invention;
Fig. 2 is a schematic plan elevation of a tractor according to the invention;

The drawings are provided by way of reference only, and will be acknowledged as not to scale.

### SPECIFIC DESCRIPTION OF THE INVENTION

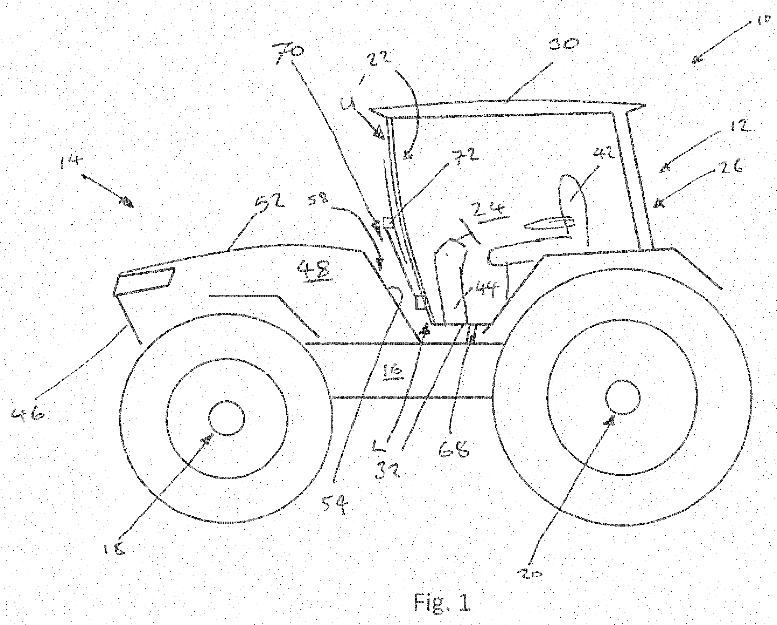

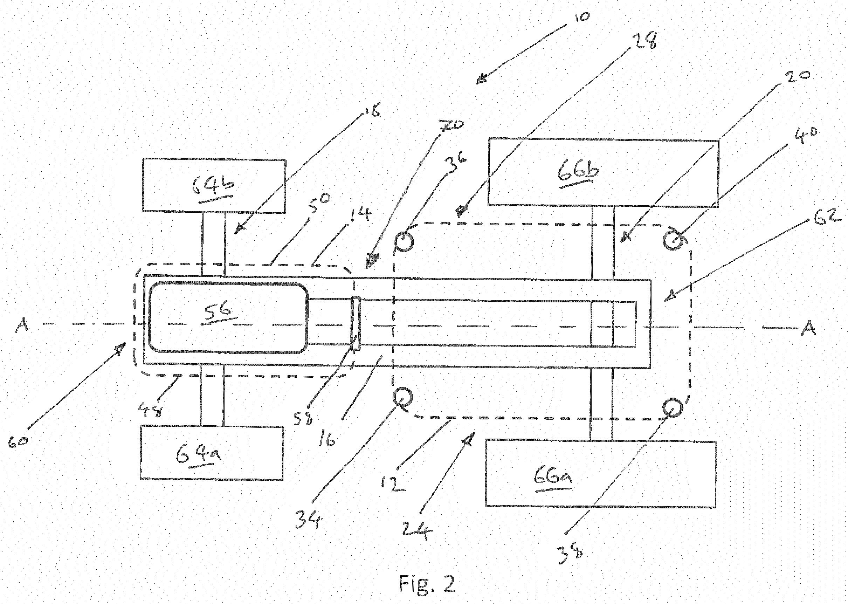

With reference to figures 1 and 2 there is shown a tractor 10. The tractor 10 has a cab 12, a hood 14, a chassis 16, a first axle 18 and a second axle 20.

The cab 12 has a windscreen 22, a door 24, a rear window 26 and a side window 28, a roof 30 and a floor 32. The windscreen 22 and the door 24 meet at a left A-pillar 34. The windscreen 22 and the side window 28 meet at a right A-pillar 36. The rear window 26 and the door 24 meet at a left B-pillar 38. The rear window 26 and the side window 28 meet at a right B-pillar 40. The roof 30 and the floor 32 close the upper and lower portions of the cab 12 in a conventional manner such that the complete cab can be considered to have a generally cuboidal structure. The cab further includes an operator seat 42 and control console 44.

The hood 14 includes a front grill 46, left panel 48, right panel 50, top panel 52 and rear cover or rear face 54. The hood 14 encloses an engine compartment 56. In this specific example the rear face 54 includes an aperture 58 for exhausting air which has been blown over and/or through the engine (not shown) which is housed in the engine compartment 56.

The chassis 16 defines a longitudinal axis of the tractor. The chassis has a front end 60 and a rear end 62.

The first axle 18 includes ground engaging means 64a and 64b.

The second axle 20 includes ground engaging means 66a and 66b.

The hood 14 and the cab 12 are mounted to the chassis 16 in a conventional manner, for example the cab 12 may be mounted to the chassis 16 via a suspension mechanism 68 such that the cab 12 is sprung relative to the chassis 16. The hood 14 may be pivotably mounted to the chassis 16 such that it can be moved from a normal operating position, to an open position to allow the servicing and mechanical maintenance of engine components. The cab 12 and hood 14 are positioned relative to the chassis such that they are separated from one another when the hood 14 is in the normal operating position as illustrated in figure 1. This arrangement provides a gap 70 between the cab 12 and the hood 14.

The first axle 18 is mounted to the chassis 16 proximate the front end 60. The second axle 20 is positioned toward the rear end 62 of the chassis 16. The hood 14 is positioned above the first axle 18 and the cab 12 is positioned above the second axle 20.

The rear cover 54 of the hood 14 includes an aperture 58 through which air may be exhausted from the engine compartment and/or air may be drawn into the engine compartment. The aperture is spaced apart from and faces towards the windscreen 22 of the cab 12. When the aperture 58 is used to facilitate the exhausting of air from the engine compartment, the air flow can be directed directly a\t the windscreen 22 of the cab 12 or in alternative embodiments, the air flow maybe directed substantially parallel to the planes of the windscreen 22 and the rear cover 54 through the gap 70.

A windscreen wiper 72 is situated on the windscreen 22 of the cab 12. The gap 70 facilitates the positioning of the windscreen wiper 72 on the windscreen 22 and provides an unobstructed envelope in which the windscreen wiper 72 can function.

The windscreen 22 of the cab 12 is supported on either side by A-pillar 34 and 36. Each of the A-pillars 34 and 36 have an upper portion U and a lower portion L. The upper portion U of each of the A-pillars 34, 36 is proximate the roof 30 of the cab 12. The lower portions L of the A-pillars 34, 36 are proximate the floor 32 of the cab 12.

Each of the A-pillars 34, 36 are arranged such that the upper portions U are further toward the front of the tractor 10 than the lower portions L. In this orientation, the windscreen 22 is canted forward over a portion of the hood 14, this can be seen in figure 1. The lower portions L are positioned further rearwards on the chassis 16 than any part of the hood 14.

Tilting the top of the windscreen 22 forwards assists in preventing dust build up on the windscreen by amplifying the cleaning effect of air which may be exhausted form the aperture 58.

It will be understood that variations fall within the scope of the present invention.

In alternative embodiments the cleaning effect of exhausted air can be realised on windscreens that are substantially vertical and or tilted rearwards.

In an alternative embodiment the rear axle may be formed integrally with the chassis

In an alternative embodiment, the chassis may be formed by and integral with a transmission housing

In an alternative embodiment the first and second axle may support rollers for caterpillar tracks.

### CLAUSES

1. An agricultural tractor (10) comprising: a chassis (16) having a front end (60) and a rear end (62), the chassis (16) defining a longitudinal axis (A); a first axle (18); a second axle (20); a hood (14) which substantially encloses an engine compartment (56); and a cab (12); wherein the first axle (18) and the hood (14) are proximate the front end (60) of the chassis (16) and the second axle (20) and the cab (12) are proximate the rear end (62) of the chassis (16); and wherein the hood (14) and cab (12) are positioned above the chassis (16), and wherein the cab (12) and chassis (16) are fixed relative to each other and longitudinally spaced apart on the chassis (16).
2. The agricultural tractor (10) according to clause 1 wherein the first axle (18) is a steered axle.
3. The agricultural tractor (10) according to clause 1 or clause 2 wherein the second axle (20) is a steered axle.
4. The agricultural tractor (10) according to any preceding clause wherein the hood (14) comprises a rear face (54), the rear face (54) both facing toward the cab (12) and spaced apart from the cab (12).
5. The agricultural tractor(10) according to any preceding clause wherein an aperture (58) is positioned between the hood (14) and the cab (12).
6. The agricultural tractor (10) according to any preceding clause wherein the rear face (54) includes an aperture (58) for the passage of air.
7. The agricultural tractor (10) according to any preceding clause wherein the aperture (58) is an air exhaust aperture.
8. The agricultural tractor (10) according to clause 5 or 6 wherein the aperture (58) is an air intake aperture.
9. The agricultural tractor (10) according to any preceding clause wherein the cab (12) is positioned above the second axle (20).
10. The agricultural tractor (10) according to any preceding clause wherein the hood (14) is positioned above the first axle (18).
11. The agricultural tractor (10) according to any preceding clause wherein the cab (12) comprises an A-pillar (34,36), the A-pillar (34,36) having an upper portion (U) and a lower portion (L), and wherein the upper portion (U) is situated further along the longitudinal axis (A) toward the first axle (18) then the lower portion (L).
12. The agricultural tractor (10) wherein the upper portion (U) extends above and over the hood (14).
13. The agricultural tractor (10) wherein lower portion (L) is positioned further toward the rear end (62) of the chassis (16) than any part of the hood (14).
14. The agricultural tractor (10) according to any preceding clause wherein a windscreen wiper (72) is positioned between the cab (12) and hood (14).
15. The agricultural tractor (10) according to any preceding clause wherein the portion of the cab (12) that faces the hood (14) is transparent.

From reading the present disclosure, other modifications will be apparent to persons skilled in the art. Such modifications may involve other features which are already known in the field and component parts therefore and which may be used instead of or in addition to features already described herein.

## Claims

1. An agricultural tractor comprising:
a chassis having a front end and a rear end, the chassis defining a longitudinal axis;
a first axle;
a second axle;
a hood which substantially encloses an engine compartment; and
a cab;
wherein the first axle and the hood are proximate the front end of the chassis and the second axle and the cab are proximate the rear end of the chassis; and wherein the hood and cab are positioned above the chassis, and wherein the cab and chassis are fixed relative to each other and longitudinally spaced apart on the chassis.

2. The agricultural tractor according to claim 1 wherein the first axle is a steered axle.

3. The agricultural tractor according to claim 1 or claim 2 wherein the second axle is a steered axle.

4. The agricultural tractor according to any preceding claim wherein the hood comprises a rear face, the rear face both facing toward the cab and spaced apart from the cab.

5. The agricultural tractor according to any preceding claim wherein an aperture is positioned between the hood and the cab.

6. The agricultural tractor according to any preceding claim wherein the rear face includes an aperture for the passage of air.

7. The agricultural tractor according to any preceding claim wherein the aperture is an air exhaust aperture.

8. The agricultural tractor according to claim 5 or 6 wherein the aperture is an air intake aperture.

9. The agricultural tractor according to any preceding claim wherein the cab is positioned above the second axle.

10. The agricultural tractor according to any preceding claim wherein the hood is positioned above the first axle.

11. The agricultural tractor according to any preceding claim wherein the cab comprises an A-pillar, the A-pillar having an upper portion and a lower portion, and wherein the upper portion is situated further along the longitudinal axis toward the first axle then the lower portion.

12. The agricultural tractor wherein the upper portion extends above and over the hood.

13. The agricultural tractor wherein lower portion is positioned further toward the rear end of the chassis than any part of the hood.

14. The agricultural tractor according to any preceding claim wherein a windscreen wiper is positioned between the cab and hood.

15. The agricultural tractor according to any preceding claim wherein the portion of the cab that faces the hood is transparent.
